# EUROPEAN PATENT APPLICATION

(11) **EP 4 703 493 A1**
(43) Date of publication of application: **04.03.2026**
(21) Application number: 24796003.2
(22) Date of filing: 22.04.2024
(51) Int. Cl.: C22C 38/48, C21D 9/32

(54) **LOW-HARDENABILITY NARROW-BANDWIDTH MN-CR SERIES ROUND GEAR STEEL AND MANUFACTURING METHOD THEREFOR**

(30) Priority: 23.04.2023 CN 202310440635
(71) Applicant: BAOSHAN IRON & STEEL CO., LTD., Shanghai 201900 (CN)
(72) Inventor: WANG, Qiang, Shanghai 201900 (CN); ZHAO, Sixin, Shanghai 201900 (CN); GAO, Jiaqiang, Shanghai 201900 (CN); YU, Dajiang, Shanghai 201900 (CN); WANG, Chengquan, Shanghai 201900 (CN); ZHANG, Jun, Shanghai 201900 (CN); WANG, Wei, Shanghai 201900 (CN)
(74) Representative: Kuhnen & Wacker Patent- und Rechtsanwaltsbüro PartG mbB
(86) International application number: PCT/CN2024/089083
(87) International publication number: WO 2024/222622

(57) **Abstract**

Low-hardenability narrow-bandwidth Mn-Cr series round gear steel and a manufacturing method therefor. The round gear steel comprises the following components in percentages by mass: C: 0.15-0.18%, Si: 0.040-0.10%, Mn: 1.10-1.40%, P ≤ 0.02%, S: 0.015-0.030%, Cr: 1.00-1.20%, Mo: 0.006-0.02%, Ni: 0.020-0.10%, Al: 0.020-0.050%, N: 0.007-0.015%, Al/N ≥ 2.0, Nb: 0.004-0.03%, [O]≤ 0.0015%, and the balance of Fe and other inevitable impurities. The Mn-Cr series round gear steel satisfies J5=33-36 HRC, J9=25-28 HRC, J15=20-24 HRC, and the hardenability bandwidth before J9 is less than or equal to 3 HRC, such that the purpose of reducing heat treatment distortion is achieved; and the performance requirements of application scenarios such as new energy automobiles for a gear steel material can be met, such that the performance stability and safety of steel for new energy automobiles are improved.

## Description

### Technical Field

The present invention relates to the field of gear steel manufacturing, and in particular to a Mn-Cr series gear round steel with low hardenability and narrow bandwidth, as well as its manufacturing method.

### Background

Gear steel is one of the key materials with higher requirements among the special alloy steels used in the fields of automobiles, railways, ships, and construction machinery. It is the manufacturing material for core components that ensure safety. With the development of industrial technology, gear steel is moving toward the directions of high performance, long service life, smooth gear operation, low noise, safety, low cost, easy processability, and a wide variety of types.

The Mn-Cr series gear steel is a high-standard steel series for car gears. This series of steels has excellent hardenability. Taking 20MnCr5, which has the widest application range, as an example, its hardenability can reach J5mm = 36-45HRC, J9mm = 34-40HRC, and J15mm = 28-34HRC. The value of hardenability reflects the core hardness of gears of different sizes, and the hardenability bandwidth has an important impact on the heat treatment deformation of gears. The hardenability bandwidth of high-quality gear steels abroad can be controlled within 4HRC, while the advanced level in China can reach 4-6HRC, and there is still a certain gap compared with the foreign control level. Since gear steels with low hardenability and narrow bandwidth are easy to be forged and formed, have good cutting performance and small heat treatment deformation, which is beneficial to the processing and manufacturing of some parts by users. The demand for gear steels with low hardenability and narrow bandwidth has begun to increase at present, and the high hardenability of 20MnCr5 can no longer meet the special requirements of users.

The control of the hardenability and hardenability bandwidth of gear steel mainly depends on its chemical composition and uniformity. Based on the influence of carbon elements and alloying elements in the steel on the hardness values at various points related to hardenability, the internal control composition range of the steel is determined.

For example, Chinese Patent Application CN108193029A discloses a control method for the narrow hardenability bandwidth of gear steel. It optimizes the hardenability calculation formula using production data to obtain calculation parameters suitable for gear steel grades. Then, based on the optimized calculation formula, it calculates the upper and lower composition limits of elements (C, Si, Mn, Cr, Ni, Mo, Ti, B) that affect hardenability, requiring that the hardenability bandwidth at J5, J9, J11, and J13 is less than 3.5HRC. The obtained composition range is compared with the ranges of △C ≤ ±0.01%, △Si ≤ ±0.02%, △Mn ≤ ±0.02%, △Cr ≤ ±0.01%, △Ni ≤ ±0.01%, △Mo ≤ ±0.01%, △Ti ≤ ±0.01%, △Al ≤ ±0.01%, △B ≤ ±0.005%, and △S ≤ ±0.002%. Finally, the narrowest control range is determined as the composition control range for gear steel requiring narrow hardenability bandwidth. Low superheat casting at 10-20°C is adopted to ensure that the heating temperature fluctuation of continuous casting billets is ≤ ±7°C and the holding time fluctuation is ≤ ±5min, thus obtaining gear steel bars with a hardenability bandwidth of less than 4HRC. However, the composition control requirements designed in this patent application are extremely high, which is not easy for large-scale industrial production, and the hardness values at J5 and J9 are still relatively high.

Chinese Patent Application CN115029618A discloses a cold-forged gear steel with narrow hardenability and its manufacturing method. In terms of mass percentage, the steel comprises: C: 0.15-0.17%, Si: 0.10-0.20%, Mn: 1.0-1.10%, Cr: 0.80-0.90%, Al: 0.02-0.04%. The hardenability of this cold-forged gear steel meets J5mm = 30-34HRC and J9mm = 21-25HRC. Although its hardenability value is relatively low, its strength also decreases, thus failing to meet the strength requirements for low-hardenability steel.

Chinese Patent Application CN111945070A discloses a gear steel with narrow hardenability and its manufacturing method. In terms of mass percentage, the gear steel with narrow hardenability comprises: C: 0.19-0.21%, Si: 0.22-0.28%, Mn: 0.82-0.87%, Cr: 0.52-0.58%, Ni: 0.50-0.55%, Mo: 0.19-0.21%, Al: 0.025-0.035%, N: 0.0080-0.0120%, and the balance being Fe and unavoidable impurities. Among these components, the ratio Al/N is 3-3.6. The obtained gear steel with narrow hardenability not only meets the hardenability requirements of the steel grade, but also reduces the influence tendency of surface quality caused by its steel composition, thereby effectively improving the surface quality of the gear steel with narrow hardenability. By adjusting the Ni content and optimizing the Al/N ratio, this patent application reduces the sensitivity of the steel surface to cracks, enabling the end-quench hardenability of the gear steel to meet J4.7mm = 36-41HRC and J7.9mm = 28-32HRC. However, the hardenability value of the gear steel proposed in this invention still fails to meet the current processing requirements of users.

### Summary

The object of the present invention is to provide a Mn-Cr series gear round steel with low hardenability and narrow bandwidth, as well as its manufacturing method. The Mn-Cr series gear round steel meets: J5 = 33-36HRC, J9 = 25-28HRC, J15 = 20-24HRC, and the hardenability bandwidth before J9 is ≤ 3HRC, so as to achieve the goal of reducing heat treatment deformation. In addition, the Mn-Cr series gear round steel also meets: yield strength ≥ 800MPa, tensile strength ≥ 1100MPa, elongation ≥ 12%, reduction of area ≥ 50%, impact energy KU2 ≥ 80J, and grain size rating not less than Grade 6. The gear round steel according to the present invention can meet the performance requirements for gear steel materials in application scenarios such as new energy vehicles, and improve the performance stability and safety of steel used for new energy vehicles.

To achieve the above object, the technical solution of the present invention is as follows:
An Mn-Cr series gear round steel with low hardenability and narrow bandwidth, its chemical composition in mass percentage is: C: 0.15~0.18%, Si: 0.040~0.10%, Mn: 1.10-1.40%, P≤0.02%, S: 0.015~0.030%, Cr: 1.00~1.20%, Mo: 0.006~0.02%, Ni: 0.020~0.10%, Al: 0.020~0.050%, N: 0.007-0.015%, Al/N ≥ 2.0, Nb: 0.004~0.03%, [0]≤0.0015%, with a balance comprising Fe and other unavoidable impurities. Furthermore, for an end-quenched sample prepared from the gear round steel, a length range b of the full martensite zone obtained at the end of the sample is: 0.70≤b≤1.16, b=0.22h-0.45, h=(6.9[Mn]²+3.2[Si]+22.6[Cr]²+23.1[Mo]+(13.0[Cr]+2.5[Mo]+9.7)[Ni]+2.5)[C],
meanwhile, a hardenability coefficient k satisfies: 1.18≤k≤1.65,
k=0.54*[C]*(-1.12+5.1*[Mn])*(1+0.7*[Si])*(1+2.16*[Cr]).

Furthermore, in the chemical composition of the gear round steel according to the present invention, the balance being Fe and other unavoidable impurities.

Preferably, among the aforementioned unavoidable impurities, Ti ≤ 0.003%, B ≤ 0.0004%, Ca ≤ 0.003%.

Preferably, among the harmful elements in the composition, As ≤ 0.02%, Sn ≤ 0.02%, Pb ≤ 0.012%, Sb ≤ 0.012%, Bi ≤ 0.012%, and a total content of the harmful elements is ≤ 0.05%.

The measured hardenability values of the gear round steel according to the present invention satisfy J5 = 33-36HRC, J9 = 25-28HRC, J15 = 20-24HRC, and the hardenability bandwidth before J9 is ≤ 3HRC. In some embodiments, 1 HRC ≤ the hardenability bandwidth before J9 ≤ 3 HRC.

A yield strength is ≥ 800MPa, a tensile strength is ≥ 1100MPa, an elongation is ≥ 12%, a reduction of area is ≥ 50%, an impact energy KU2 is ≥ 90J, and a grain size rating is not less than Grade 6, of the gear round steel according to the present invention.

In some embodiments, the yield strength of the gear round steel according to the present invention is 800-820MPa.

In some embodiments, the tensile strength of the gear round steel according to the present invention is 1100-1150MPa.

In some embodiments, the elongation of the gear round steel according to the present invention is 12%-19%.

In some embodiments, the reduction of area of the gear round steel according to the present invention is 50%-65%.

In some embodiments, the impact energy KU2 of the gear round steel according to the present invention is 90-100J.

In some embodiments, the grain size rating of the gear round steel according to the present invention is Grade 7.0-9.0.

In the composition design of the gear round steel according to the present invention:
C: C is the most important element affecting the hardenability of gear steel. It exerts a significant influence on the end-quench hardenability values and is also the most fundamental effective strengthening element in steel. Since carburized gear steel needs to ensure the toughness and a certain level of strength of the gear core, the carbon content is controlled within the range of 0.15-0.18% in the present invention.

Si: Si exhibits a strong solid solution strengthening effect in steel. It replaces Fe atoms through a substitutional mechanism, thereby impeding dislocation movement and significantly improving the yield strength of steel. Meanwhile, Si can reduce the critical cooling rate of steel to a certain extent, increasing the hardenability value. It exerts a significant influence on the end-quench hardenability values beyond J5mm. However, Si mainly enhances the stability of supercooled austenite in the medium-temperature range, while having little effect on the high-temperature range of 650°C-700°C-and even reducing its stability. In the present invention, the silicon content is required to be in the range of 0.040-0.10%.

Mn: Mn exerts effects of solid solution strengthening and grain refinement, thereby improving the strength of steel. It also significantly enhances the hardenability of steel, with a more pronounced influence on the end-quench hardenability values beyond J7mm. However, Mn can lower the A₁ temperature of steel, promote the growth of austenite grains, and increase the overheating sensitivity of the steel material. Therefore, the manganese content is controlled within the range of 1.10-1.40% in the present invention.

Cr: Cr can increase the nucleation work and transformation activation energy of pearlite, reduce the nucleation rate and growth rate of pearlite, enhance the stability of supercooled austenite, improve the hardenability of steel, achieve a strengthening effect, and exert a positive impact on impact toughness. Cr has a significant influence on the values at J5, J9, and J15. Thus, the chromium content is controlled within the range of 1.00-1.20% in the present invention.

Ni: Ni can effectively improve the core toughness of gear steel, reduce the ductile-brittle transition temperature, and enhance low-temperature impact performance. Meanwhile, it can refine the microstructure and achieve a strengthening effect. However, excessively high Ni content will reduce the machinability of gear steel after hot working. Ni has a certain influence on J5 and a more significant influence on J9 and J15. Thus, the nickel content is required to be in the range of 0.020-0.10% in the present invention.

Mo: The reasonable combination of Mo and Cr can significantly improve the hardenability and temper resistance of steel, and Mo is also capable of refining grains. However, excessively high Mo content will lead to the formation of grain boundary ferrite films, which is detrimental to the hot ductility of steel, increases the tendency of reheat cracking of steel, and raises costs. Mo has an insignificant influence on the values before J5 but exerts a more significant influence on those at positions beyond J7. Therefore, the molybdenum content is controlled within the range of 0.006-0.020% in the present invention.

In the present invention, the phosphorus content is required to be ≤ 0.02%. In some embodiments, the P content ranges from 0.005% to 0.02%, such as 0.007% or 0.010%.

In the present invention, the oxygen content is required to be ≤ 0.0015%. In some embodiments, the [O] content ranges from 0.0010% to 0.0015%, such as 0.0012%.

Hardenability refers to the ability of steel to form martensite during quenching after austenitization. Its extent is related to the cooling rate at various points on the cross-section of round steel. When the cooling rate is higher than the critical quenching rate of the steel, full martensite will be obtained. C is the main component affecting the hardness associated with hardenability, while Si, Mn, Cr, and Ni reduce the critical quenching rate of steel and improve its hardenability. To ensure the hardenability of the gear steel of the present invention, it is required that the length b of the full martensite zone obtained at the end of the end-quenched sample made from the round steel of the present invention satisfies: 0.70≤b≤1.16, b=0.22h-0.45, h=(6.9[Mn]²+3.2[Si]+22.6[Cr]²+23.1[Mo]+(13.0[Cr]+2.5[Mo]+9.7)[Ni]+2.5)[C].

In some embodiments, b satisfies: 0.80≤b≤1.15.

The end-quench sample is a standard end-quench sample made from the gear round steel of the present invention in accordance with GB/T 225-2006 End-Quench Test Method for Hardenability of Steel.

To ensure the hardening capacity of the gear steel according to the present invention and simultaneously limit the distance from the end face to the half-martensite zone after quenching of the round steel, based on calculations and data analysis, it is required that the hardenability coefficient k of the round steel of the present invention satisfies: 1.18≤k≤1.65,
k=0.54*[C]*(-1.12+5.1 *[Mn])*(1+0.7*[Si])*(1+2.16*[Cr]).

In some embodiments, k satisfies: 1.25≤k≤1.55.

Among these elements, C is the primary element affecting hardenability. The volume and size of carbides formed by C and carbide-forming elements influence the hardness at different distances from the end of the end-quench sample. Meanwhile, the pinning effect of carbides on austenite grains affects the austenite grain size, thereby affecting hardenability. Mn, Cr, and Si have a much more significant effect on retarding bainite transformation than on retarding pearlite transformation, while Mo has a far greater effect on retarding pearlite transformation than on retarding bainite transformation. Ni also retards pearlite transformation. Therefore, Mn, Cr, Si, Mo, and Ni improve the hardenability of the round steel by enhancing the stability of supercooled austenite.

To enable the gear steel of the present invention to meet the high-temperature carburizing process, Al: 0.020-0.050%, N: 0.007-0.015%, Al/N ≥ 2.0, and Nb: 0.004-0.03% are controlled. This is because AIN formed by Al and N can effectively inhibit the growth of austenite grains and refine austenite grains during rolling heating and high-temperature carburizing. However, AIN tends to aggregate and dissolve at approximately 940°C. As the temperature increases, Al exerts an adverse effect on the inhibition of austenite grain size. Nb is a highly effective alloying element for grain refinement. Nb (C, N) can pin grain boundaries, inhibit the growth of austenite grains, and effectively reduce carburizing-quenching deformation. Nevertheless, when the Nb content exceeds a certain value, the carbonitride precipitates of Nb in the cast slab cannot re-dissolve into the gear steel matrix. With the implementation of subsequent hot working or heat treatment processes, some precipitates will coarsen, and the coarse precipitates fail to prevent the growth of austenite grains during the high-temperature carburizing process. Therefore, the content of Al in the gear steel designed by the present invention is 0.020-0.050%, and the content of Nb is 0.004-0.03%. The present invention requires that Al/N ≥ 2.0. In some embodiments, 2.0 ≤ Al/N ≤ 4.0.

The manufacturing method for the Mn-Cr series gear round steel with low hardenability and narrow bandwidth according to the present invention comprises the following steps:
1) smelting and casting
   smelting the steel according to the above-mentioned composition and casting it into a casting billet;
2) heating
   the temperature of the preheating section is 840-880°C, the temperature of the heating section is controlled at 1120-1175°C, the temperature of the soaking section is 1150-1230°C, and the total heating time in the heating furnace is not less than 4 hours;
3) rolling
   the start rolling temperature is controlled at 1100-1170°C, and the finish rolling temperature is 950-1000°C;
4) quenching + tempering
   the primary quenching temperature is 850-910°C with a holding time of 30-60 minutes, followed by oil cooling or water cooling to room temperature; the secondary quenching temperature is 800-830°C with a holding time of 30-60 minutes, followed by oil cooling or water cooling to room temperature; the tempering temperature is 150-200°C with a holding time of 60-150 minutes, and after tempering, air cooling is conducted to cool to room temperature.

In some embodiments, the total heating duration in the heating furnace is 4-6 hours, such as 4-5.5 hours.

Preferably, the smelting is performed using an electric furnace or converter, followed by LF (Ladle Furnace) refining and VD (Vacuum Degassing) vacuum degassing. During the LF refining process, a refining time is ≥ 50 minutes, a FeO content in the slag is less than 1.0wt%, and a white slag time is ≥ 20 minutes. During the VD vacuum degassing process, a vacuum degree is controlled to be ≤ 66.7 Pa, a high vacuum time is ≥ 20 minutes, a standing time is ≥ 10 minutes, and a final temperature of VD is 1550°C-1580°C. In some embodiments, the refining time is 50-65 minutes. In some embodiments, the white slag time is 20-30 minutes. In some embodiments, the high vacuum time is 20-35 minutes. In some embodiments, the standing time is 10-20 minutes.

Preferably, continuous casting is adopted for the casting process. To ensure the compositional uniformity of the continuous casting billets from the surface to the core, combined with the control of molten steel superheat, and in consideration of the present invention's requirements for narrow composition ranges of Cr, Ni, and Mo, narrow hardenability bandwidth, as well as the cross-sectional size of the casting slab, a frequency of mold electromagnetic stirring is controlled at 2.0-3.0 Hz with a current of 150-300 A; a frequency of final electromagnetic stirring is controlled at 8.0-8.5 Hz with a current of 300-350 A; a molten steel superheat is controlled at 22-38°C, and a continuous casting withdrawal speed is controlled at 0.62-0.68 m/min.

In the manufacturing method of the present invention:
Throughout the entire VD vacuum degassing process, bottom-blowing nitrogen can be specifically used for nitrogen addition to prevent secondary oxidation of the molten steel to improve the purity of the molten steel.

In the continuous casting process, the frequency of mold electromagnetic stirring is controlled at 2.0-3.0 Hz with a current of 150-300 A, and the frequency of final electromagnetic stirring is controlled at 8.0-8.5 Hz with a current of 300-350 A. In the continuous casting process, electromagnetic stirring can promote larger inclusions to float up as soon as possible, improve the purity of the molten steel, prevent the aggregation of inclusions, reduce the size of inclusions, and reduce the harmful effects of inclusions on the performance of the steel.

In the heating of continuous casting billets, the temperature of the preheating section is 40°C higher than that in the existing technology. Therefore, hot charging into the furnace is required, which increases the heating rate from the preheating section to the heating section, promotes more uniform composition, and accelerates the dissolution of precipitated phases. This facilitates the dispersed precipitation during the rolling and cooling processes, ensuring stable hardenability of the round steel.

In the rolling process, the start rolling temperature is controlled at 1100-1170°C, and the finish rolling temperature is controlled at 950-1000°C. Air cooling (e.g., on a cooling bed) is conducted to obtain a ferrite + pearlite structure. Blowing cold air or spraying water is avoided to prevent the formation of bainite, which would cause structural inhomogeneity and affect the performance of the round steel obtained through subsequent heat treatment.

The heat treatment process is quenching + tempering. The primary quenching temperature is 850-910°C with a holding time of 30-60 minutes, followed by oil cooling or water cooling to room temperature. This promotes the formation of more nucleation sites and refines the austenite grains. The secondary quenching temperature is 800-830°C with a holding time of 30-60 minutes, followed by oil cooling or water cooling to room temperature. The tempering temperature is 150-200°C with a holding time of 60-150 minutes, allowing sufficient dispersed precipitation of carbides. After tempering, the steel is air-cooled to room temperature.

Advantages and beneficial effects of the present invention compared with the prior art:
Based on the physical metallurgy single-factor method, the present invention studies the effects of C, Si, Mn, Cr, Mo, and Ni elements on hardenability, and designs and manufactures an Mn-Cr series gear round steel with low hardenability and narrow bandwidth. It meets the requirements of J5=33-36HRC, J9=25-28HRC, J15=20-24HRC, and a hardenability bandwidth of ≤3HRC before J9, which can achieve the goal of minimal heat treatment deformation for users. Meanwhile, its mechanical properties meet the following standards: yield strength ≥800MPa, tensile strength ≥1100MPa, elongation ≥12%, reduction of area ≥50%, and impact energy KU2 ≥90J.

Compared with Chinese patent applications CN115029618A and CN111945070A, the gear round steel of the present invention has lower J5, J9, and J15 values, meeting the processing and application requirements of low hardenability gear steel, and is more suitable for application scenarios with strict requirements on heat treatment deformation, such as transmission ring gears of new energy vehicles.

Compared with Chinese patent application CN115029618A, the gear round steel of the present invention proposes clearer requirements for the content relationships of C, Si, Mn, Cr, Mo, and Ni elements. By utilizing the interactions between elements, its mechanical properties are not reduced while meeting the low hardenability requirements, and the application scenarios are different.

The gear round steel of the present invention can achieve a matching of high strength and high toughness through the secondary quenching + tempering process, meeting the application requirements of high-strength steel.

### Description of the drawings

Fig. 1 shows the hardenability curves of Examples 1-6 and Comparative Examples 1-2 of the present invention;
Fig. 2 is a metallographic photograph of the microstructure of Example 2 of the present invention after quenching + tempering treatment (magnification: 500×).

### Detailed Description

The present invention will be further explained and interpreted below in conjunction with the drawings of the description and the specific examples, but the explanation and interpretation do not constitute an undue limitation to the technical solution of the present invention.

The compositions of the examples of the Mn-Cr series gear steel with low hardenability and narrow bandwidth according to the present invention are shown in Table 1 and Table 2, with the balance being Fe and unavoidable impurities.

The composition coefficients of the gear round steel in the examples are shown in Table 3. It can be seen that the length b of the martensite zone of the round steel in each example ranges from 0.70 to 1.16, and the hardenability coefficient k ranges from 1.18 to 1.65.

The process parameters in the manufacturing method of the examples of the present invention are shown in Tables 4-1, 4-2, and 5. The method adopted electric furnace smelting - LF refining - VD vacuum degassing - continuous casting - heating - rolling - slow cooling, and the following steps were comprised:

### 1) Smelting and Casting

Smelting and casting into billets were conducted in accordance with the compositions specified in Table 1 and Table 2. An electric furnace was employed for smelting, which was followed by LF refining and VD vacuum degassing. During the LF refining process, the refining time was controlled to be ≥ 50 min, the FeO content in the slag was less than 1.0wt%, and the white slag time was ≥ 20 min. During the VD vacuum degassing treatment, the vacuum degree was controlled to be ≤ 66.7 Pa, the high vacuum time was ≥ 20 min, the standing time was ≥ 10 min, the final temperature of VD was 1550°C~1580°C, and bottom-blowing nitrogen for nitrogen addition was adopted throughout the entire VD vacuum degassing treatment. Continuous casting was used for casting, the frequency of mold electromagnetic stirring was controlled to be 2.0~3.0 Hz, and the current was 150~300 A. The frequency of final electromagnetic stirring was 8.0~8.5 Hz, and the current was 300-350 A. The molten steel superheat was controlled to be 22~38°C, and the continuous casting withdrawal speed was controlled to be 0.62~0.68 m/min.

### 2) Heating

The temperature of the preheating section was 840~880°C, the temperature of the heating section was controlled at 1120~1175°C, the temperature of the soaking section was 1150~1230°C, and the total heating time in the heating furnace was not less than 4 hours.

### 3) Rolling

The start rolling temperature was controlled to be 1100~1170°C, and the finish rolling temperature was controlled to be 950~1000°C.

### 4) Quenching + Tempering

The primary quenching temperature was 850~910°C with a holding time of 30~60 minutes, and the steel was cooled to room temperature by oil cooling or water cooling. The secondary quenching temperature was 800~830°C with a holding time of 30~60 minutes, and the steel was cooled to room temperature by oil cooling or water cooling. The tempering temperature was 150~200°C with a holding time of 60~150 minutes, and after tempering, the steel was air-cooled to room temperature.

The microstructure of the gear round steel obtained in step 3) in the hot-rolled state was observed using the metallographic method. The results show that the microstructures of the gear round steels of Examples 1-6 in the hot-rolled state are all ferrite + pearlite.

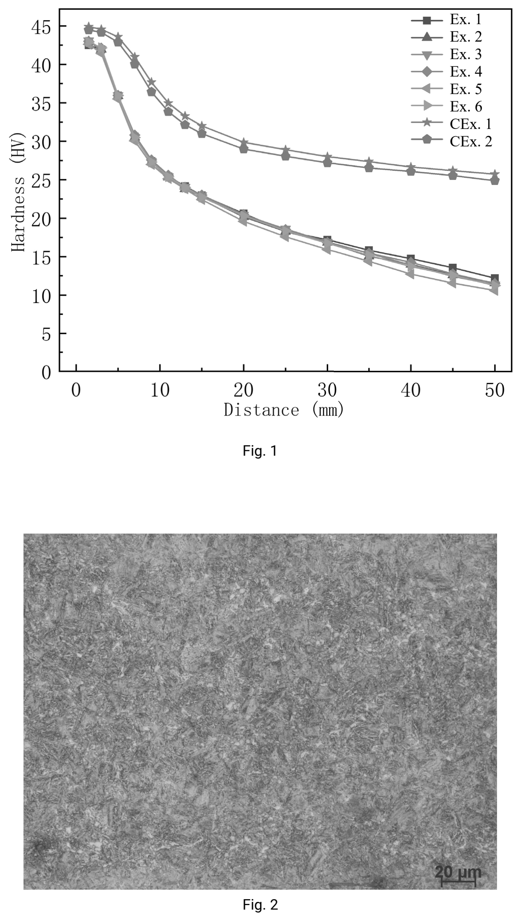

The obtained round steel was subjected to an end-quench test in accordance with GB/T 225-2006, and the hardness at different positions from the end of the sample was measured (the hardness testing standards are: GB/T 230.1, GB/T 230.2, GB/T 230.3), as shown in Table 6 and Fig. 1.

Room temperature tensile tests and room temperature impact tests were conducted in accordance with GB/T 228.1-2010 and GB/T 229-2007, respectively, and the actual measured values of mechanical properties are shown in Table 7.

Since the steels of different heats obtained after smelting for each example and comparative example can be processed into multiple batches of bars, the hardenability values at the three points (J5, J9, and J15) of the multiple batches of bars from the same example or comparative example are not completely identical. Therefore, in Table 6, the hardenability values of Examples 1-6 and Comparative Examples 1-2 at the three points (J5, J9, and J15) are presented as ranges.

It can be seen from Table 6 that compared with Comparative Examples 1 and 2, the round steels of Examples 1-6 have a narrower hardenability bandwidth, which can reach ≤3HRC before J9; moreover, the values of J5, J9, and J15 are significantly lower than those of the Comparative Examples. These results demonstrate excellent technical effects and meet the requirements of the present invention for low hardenability and narrow bandwidth.

As can be seen from Table 7, Examples have a yield strength of ≥800MPa, a tensile strength of ≥1100MPa, an elongation of ≥12%, a reduction of area of ≥50%, and an impact energy KU2 of ≥90J. They meet the design requirements of the present invention and exhibit excellent comprehensive mechanical properties. Here, KU2 refers to the impact absorption energy of a U-notched specimen in the Charpy pendulum impact test.

As can be seen from Fig. 2, the gear round steel of the present invention exhibits a fine tempered martensite structure after being subjected to the quenching and tempering treatment.

After the hot-rolled round steels of Examples 1-6 were held at 980°C for 4 hours, their grain size ratings were tested in accordance with the standard GB/T 6394-2017 Method for Determination of Average Grain Size of Metals, and the test results are shown in Table 8.

The gear round steel with low hardenability and narrow bandwidth prepared by the method of the present invention meets the requirements of J5=33-36HRC, J9=25-28HRC, J15=20-24HRC, and a hardenability bandwidth of ≤3HRC before J9. Meanwhile, by controlling the contents of Al and N and adding Nb element, the grain size rating of the hot-rolled round steel after being held at 980°C for 4 hours is not less than Grade 6. Therefore, the gear round steel with low hardenability and narrow bandwidth prepared by the method of the present invention can meet the processing requirements of high-temperature carburized ring gears for new energy vehicles.

It should be noted that the above embodiments are provided to enable those skilled in the art to understand the content of the present invention and implement it accordingly. The scope of protection of the present invention is not limited to the above embodiments. Therefore, any equivalent changes or modifications made based on the principles and design concepts disclosed in the present invention shall fall within the protection scope of the present invention.

**Table 1: Main Chemical Compositions of Examples and Comparative Examples (wt.%)**

| No. | C | Si | Mn | P | S | Ni | Cr | Mo | Nb | Al | N | O | Ti | B | Ca |
|---|---|---|---|---|---|---|---|---|---|---|---|---|---|---|---|
| Ex. 1 | 0.163 | 0.068 | 1.10 | 0.010 | 0.017 | 0.025 | 1.18 | 0.010 | 0.010 | 0.042 | 0.011 | 0.0013 | 0.0006 | 0.0001 | 0.0008 |
| Ex. 2 | 0.174 | 0.056 | 1.25 | 0.009 | 0.020 | 0.050 | 1.04 | 0.009 | 0.006 | 0.037 | 0.010 | 0.0015 | 0.0003 | 0.0001 | 0.0017 |
| Ex. 3 | 0.152 | 0.060 | 1.40 | 0.008 | 0.026 | 0.086 | 1.01 | 0.006 | 0.027 | 0.022 | 0.008 | 0.0014 | 0.0004 | 0.0001 | 0.001 |
| Ex. 4 | 0.159 | 0.083 | 1.15 | 0.009 | 0.018 | 0.040 | 1.03 | 0.008 | 0.011 | 0.047 | 0.014 | 0.0013 | 0.0004 | 0.0001 | 0.0014 |
| Ex. 5 | 0.165 | 0.091 | 1.13 | 0.007 | 0.019 | 0.028 | 1.10 | 0.007 | 0.020 | 0.035 | 0.012 | 0.0015 | 0.0005 | 0.0001 | 0.0008 |
| Ex. 6 | 0.156 | 0.040 | 1.20 | 0.008 | 0.030 | 0.031 | 1.08 | 0.020 | 0.007 | 0.036 | 0.013 | 0.0012 | 0.0004 | 0.0001 | 0.0008 |
| CEx. 1 | 0.200 | 0.10 | 1.30 | 0.018 | 0.022 | 0.25 | 1.20 | - | - | 0.034 | 0.011 | - | - | 0.0002 | - |
| CEx. 2 | 0.168 | 0.11 | 1.01 | 0.009 | 0.015 | - | 0.82 | - | - | 0.025 | 0.045 | 0.0022 | 0.002 | 0.0007 | 0.002 |

| | | | | | | | | | | | | | | | |
|---|---|---|---|---|---|---|---|---|---|---|---|---|---|---|---|
| Note: Comparative Example 1 - CN113444979A, Comparative Example 2 - CN115029618A. | | | | | | | | | | | | | | | |

**Table 2: Chemical Compositions of Harmful Elements in Examples (wt.%)**

| No. | As | Sn | Pb | Sb | Bi | Sum |
|---|---|---|---|---|---|---|
| Ex. 1 | 0.0038 | 0.0065 | 0.0002 | 0.0001 | 0.0006 | 0.0112 |
| Ex. 2 | 0.0033 | 0.0063 | 0.0002 | 0.0001 | 0.0002 | 0.0101 |
| Ex. 3 | 0.0034 | 0.0086 | 0.0005 | 0.0001 | 0.0001 | 0.0127 |
| Ex. 4 | 0.0035 | 0.0091 | 0.0004 | 0.0001 | 0.0003 | 0.0133 |
| Ex. 5 | 0.0037 | 0.0068 | 0.0006 | 0.0001 | 0.0004 | 0.0116 |
| Ex. 6 | 0.0033 | 0.007 | 0.0004 | 0.0001 | 0.0005 | 0.0113 |

**Table 3: Composition Coefficients of Round Steels in Examples and Comparative Examples**

| | The length b of the martensite zone | Hardenability coefficient k |
|---|---|---|
| Ex. 1 | 1.11 | 1.36 |
| Ex. 2 | 1.05 | 1.54 |
| Ex. 3 | 0.93 | 1.52 |
| Ex. 4 | 0.84 | 1.28 |
| Ex. 5 | 0.99 | 1.37 |
| Ex. 6 | 0.93 | 1.34 |
| CEx. 1 | 1.90 | 2.12 |
| CEx. 2 | 0.48 | 1.01 |

| | | |
|---|---|---|
| Note: Comparative Example 1 - CN113444979A, Comparative Example 2 - CN115029618A. | | |

**Table 4-1**

| | LF refini ng time min | Whit e slag time min | Vacuum degassi ng standin g time min | Mold electromagn etic stirring frequency HZ | Mold electromagn etic stirring current A | Final electromagn etic stirring frequency HZ | Final electromagn etic stirring current A | Tundish molten steel superhe at °C | Continuo us casting withdraw al speed m/min | Preheatin g section temperat ure °C | Heating section temperat ure °C | Soaking section temperat ure °C | Heati ng time h | Start rolling temperat ure °C | Finish rolling temperat ure °C |
|---|---|---|---|---|---|---|---|---|---|---|---|---|---|---|---|
| Ex. 1 | 50 | 28 | 15 | 2.2 | 160 | 8.0 | 300 | 28 | 0.62 | 840 | 1120 | 1158 | 5.5 | 1115 | 985 |
| Ex. 2 | 53 | 25 | 16 | 2.3 | 200 | 8.1 | 310 | 30 | 0.63 | 850 | 1135 | 1165 | 4.5 | 1120 | 993 |
| Ex. 3 | 55 | 23 | 17 | 2.4 | 260 | 8.3 | 320 | 25 | 0.65 | 860 | 1145 | 1190 | 4.6 | 1130 | 1000 |
| Ex. 4 | 60 | 20 | 16 | 2.5 | 300 | 8.2 | 330 | 26 | 0.66 | 855 | 1155 | 1211 | 4.2 | 1145 | 990 |
| Ex. 5 | 65 | 22 | 17 | 2.7 | 180 | 8.5 | 340 | 32 | 0.68 | 880 | 1160 | 1220 | 4 | 1155 | 960 |
| Ex. 6 | 58 | 26 | 14 | 2.3 | 220 | 8.4 | 350 | 35 | 0.64 | 875 | 1170 | 1175 | 5 | 1165 | 950 |
| CE x. 1 | - | - | - | - | - | - | - | - | - | - | - | - | - | - | - |
| CE x. 2 | - | - | - | - | - | - | - | - | - | - | - | 1160 | - | - | 921 |

| | | | | | | | | | | | | | | | |
|---|---|---|---|---|---|---|---|---|---|---|---|---|---|---|---|
| Note: Comparative Example 1 - CN113444979A, Comparative Example 2 - CN115029618. | | | | | | | | | | | | | | | |

**Table 4-2**

| | FeO content in slag during LF refining process wt% | Vacuum degree in VD vacuum degassing Pa | High vacuum time in VD vacuum degassing min | Final temperature in VD °C |
|---|---|---|---|---|
| Ex. 1 | 0.70 | 47 | 35 | 1550 |
| Ex. 2 | 0.60 | 53 | 30 | 1560 |
| Ex. 3 | 0.50 | 57 | 27 | 1565 |
| Ex. 4 | 0.45 | 60 | 25 | 1570 |
| Ex. 5 | 0.35 | 63 | 23 | 1575 |
| Ex. 6 | 0.30 | 66.7 | 20 | 1580 |
| CEx. 1 | - | - | - | - |
| CEx. 2 | - | - | - | - |

**Table 5**

| No. | Primary quenching | Secondary quenching | Tempering |
|---|---|---|---|
| Ex. 1 | 850°C×30min oil cooling | 805°C×60min oil cooling | 155°C×150min air cooling |
| Ex. 2 | 865°C×50min oil cooling | 815°C×50min oil cooling | 165°C×120min air cooling |
| Ex. 3 | 870°C×60min oil cooling | 825°C×40min oil cooling | 175°C×90min air cooling |
| Ex. 4 | 880°C×40min oil cooling | 830°C×45min oil cooling | 185°C×80min air cooling |
| Ex. 5 | 890°C×50min oil cooling | 810°C×52min oil cooling | 190°C×70min air cooling |
| Ex. 6 | 910°C×55min oil cooling | 820°C×30min oil cooling | 200°C×60min air cooling |

**Table 6: Hardenability Values of Round Steels in Examples and Comparative Examples**

| | Hardenability/HRC | The hardenability bandwidth before J9 |
|---|---|---|
| Ex. 1 | J5/33~35, J9/25~27, J15/20~22 | ≤3HRC |
| Ex. 2 | J5/34~35, J9/25~26, J15/21~23 | |
| Ex. 3 | J5/34~36, J9/26~28, J15/20~23 | |
| Ex. 4 | J5/33~35, J9/25~28, J15/22~24 | |
| Ex. 5 | J5/34~36, J9/26~27, J15/21~24 | |
| Ex. 6 | J5/33~36, J9/26~28, J15/20~24 | |
| CN113444979A | J5/44.4, J9/39.1, J15/34.5 | ≤4HRC |
| CN115029618A | J5/32.5, J9/24.1 | |

Note: J5 represents the hardness at 5 mm from the end of the end-quenched sample, J9 represents the hardness at 9 mm from the end of the end-quenched sample, and J15 represents the hardness at 15 mm from the end of the end-quenched sample.

**Table 7: Mechanical Properties of Round Steels in Examples**

| | Yield strength MPa | Tensile strength MPa | Elongation % | Reduction of area % | Impact energy KU2 J |
|---|---|---|---|---|---|
| Ex. 1 | 805 | 1130 | 17.5 | 59 | 90 |
| Ex. 2 | 810 | 1120 | 16.5 | 56 | 94 |
| Ex. 3 | 812 | 1135 | 15.5 | 58 | 96 |
| Ex. 4 | 807 | 1150 | 17.5 | 61 | 97 |
| Ex. 5 | 820 | 1110 | 18.0 | 63 | 97 |
| Ex. 6 | 802 | 1140 | 18.5 | 60 | 90 |

**Table 8: Grain Size Rating of Round Steels in Examples**

| | Ex. 1 | Ex. 2 | Ex. 3 | Ex. 4 | Ex. 5 | Ex. 6 |
|---|---|---|---|---|---|---|
| Grain size rating | 8.0 | 7.0 | 9.0 | 8.5 | 9.0 | 7.5 |

## Claims

1. An Mn-Cr series gear round steel with low hardenability and narrow bandwidth, its chemical composition in mass percentage is: C: 0.15~0.18%, Si: 0.040~0.10%, Mn: 1.10-1.40%, P≤0.02%, S: 0.015~0.030%, Cr: 1.00~1.20%, Mo: 0.006~0.02%, Ni: 0.020~0.10%, Al: 0.020~0.050%, N: 0.007~0.015%, Al/N≥2.0, Nb: 0.004~0.03%, [0]≤0.0015%, with a balance comprising Fe and other unavoidable impurities; and for an end-quenched sample prepared from the gear round steel, a length range b of the full martensite zone obtained at the end of the sample is: 0.70≤b≤1.16, b=0.22h-0.45,
h=(6.9[Mn]²+3.2[Si]+22.6[Cr]²+23.1[Mo]+(13.0[Cr]+2.5[Mo]+9.7)[Ni]+2.5)[C];
meanwhile, a hardenability coefficient k satisfies: 1.18≤k≤1.65,
k=0.54*[C]*(-1.12+5.1*[Mn])*(1+0.7*[Si])*(1+2.16*[Cr]).

2. The Mn-Cr series gear round steel with low hardenability and narrow bandwidth according to claim 1, wherein in its chemical composition, the balance being Fe and other unavoidable impurities.

3. The Mn-Cr series gear round steel with low hardenability and narrow bandwidth according to claim 1 or 2, wherein among the unavoidable impurities, Ti ≤ 0.003%, B ≤ 0.0004%, Ca ≤ 0.003%.

4. The Mn-Cr series gear round steel with low hardenability and narrow bandwidth according to claim 1, 2 or 3, wherein for the harmful elements in the composition, As ≤ 0.02%, Sn ≤ 0.02%, Pb ≤ 0.012%, Sb ≤ 0.012%, Bi ≤ 0.012%, and a total content of the harmful elements is ≤ 0.05%.

5. The Mn-Cr series gear round steel with low hardenability and narrow bandwidth according to any one of claims 1 to 4, wherein a microstructure of the gear round steel in the hot-rolled state is ferrite + pearlite.

6. The Mn-Cr series gear round steel with low hardenability and narrow bandwidth according to any one of claims 1 to 5, wherein the measured hardenability values of the gear round steel satisfy J5 = 33-36 HRC, J9 = 25-28 HRC, J15 = 20-24 HRC, and the hardenability bandwidth before J9 is ≤ 3 HRC.

7. The Mn-Cr series gear round steel with low hardenability and narrow bandwidth according to any one of claims 1 to 6, wherein the mechanical properties of the gear round steel satisfy: yield strength ≥ 800 MPa, tensile strength ≥ 1100 MPa, elongation ≥ 12%, reduction of area ≥ 50%, impact energy KU2 ≥ 90 J, and grain size rating not less than Grade 6.

8. The Mn-Cr series gear round steel with low hardenability and narrow bandwidth according to claim 6, wherein the hardenability bandwidth before J9 satisfies: 1 HRC ≤ the hardenability bandwidth before J9 ≤ 3 HRC.

9. The Mn-Cr series gear round steel with low hardenability and narrow bandwidth according to claim 7, wherein the yield strength is 800-820 MPa, the tensile strength is 1100-1150 MPa, the elongation is 12%-19%, the reduction of area is 50%-65%, the impact energy KU2 is 90-100 J, and the grain size rating is Grade 7.0-9.0, of the gear round steel.

10. The Mn-Cr series gear round steel with low hardenability and narrow bandwidth according to claim 1, wherein b satisfies: 0.80 ≤ b ≤ 1.15, and/or k satisfies: 1.25 ≤ k ≤ 1.55.

11. A method for manufacturing the Mn-Cr series gear round steel with low hardenability and narrow bandwidth according to any one of claims 1 to 10, wherein comprising the following steps:
(1) smelting and casting
smelting, according to the composition as described in claim 1, 2, 3 or 4, and casting into a casting billet;
(2) heating
a temperature of a preheating section is 840-880°C, a temperature of a heating section is controlled at 1120-1175°C, a temperature of a soaking section is 1150-1230°C, and a total heating time in a heating furnace is not less than 4 hours;
(3) rolling
a start rolling temperature is controlled at 1100-1170°C, and a finish rolling temperature is 950-1000°C;
(4) quenching + tempering
a primary quenching temperature is 850-910°C with a holding time of 30-60 minutes, followed by oil cooling or water cooling to room temperature; a secondary quenching temperature is 800-830°C with a holding time of 30-60 minutes, followed by oil cooling or water cooling to room temperature; a tempering temperature is 150-200°C with a holding time of 60-150 minutes, and after tempering, air cooling is conducted to cool to room temperature.

12. The method for manufacturing the Mn-Cr series gear round steel with low hardenability and narrow bandwidth according to claim 11, wherein the smelting is carried out in an electric furnace or a converter, followed by LF refining and VD vacuum degassing; during the LF refining process, a refining time is ≥ 50 min, a FeO content in a slag is less than 1.0wt%, and a white slag time is ≥ 20 min; during the VD vacuum degassing process, a vacuum degree is controlled to be ≤ 66.7 Pa, a high vacuum time is ≥ 20 min, a standing time is ≥ 10 min, a final temperature of VD is 1550°C~1580°C, and bottom-blowing nitrogen is used for nitrogen addition throughout the entire VD vacuum degassing process.

13. The method for manufacturing the Mn-Cr series gear round steel with low hardenability and narrow bandwidth according to claim 11, wherein continuous casting is adopted for the casting, a frequency of mold electromagnetic stirring is controlled at 2.0-3.0 Hz with a current of 150-300 A; a frequency of final electromagnetic stirring is controlled at 8.0-8.5 Hz with a current of 300-350 A; a molten steel superheat is controlled at 22-38°C; and a continuous casting withdrawal speed is controlled at 0.62-0.68 m/min.
